Europäisches Patentamt

European Patent Office

Office européen des brevets

(11) Veröffentlichungsnummer: **0 348 384**

**A2**

(12) **EUROPÄISCHE PATENTANMELDUNG**

(21) Anmeldenummer: **89890170.7**

(51) Int. Cl.⁴: **C 01 B 13/34**

(22) Anmeldetag: **19.06.89**

(30) Priorität: **22.06.88 AT 1620/88**

(43) Veröffentlichungstag der Anmeldung:
**27.12.89 Patentblatt 89/52**

(84) Benannte Vertragsstaaten:
**CH DE FR GB LI SE**

(71) Anmelder: **Maschinenfabrik Andritz Actiengesellschaft
Statteggerstrasse 18
A-8045 Graz-Andritz (AT)**

(72) Erfinder: **Kladnig, Wolfgang F.,Dipl.-Ing., Dr.
Krottenbachstrasse 106/10/4
A-1190 Wien (AT)**

**Horn, Juanito
Obere Amtshausgasse 10-12/7
A-1050 Wien (AT)**

(74) Vertreter: **Köhler-Pavlik, Johann, Dipl.-Ing.
Margaretenplatz 5
A-1050 Wien (AT)**

Die Bezugnahme auf die Zeichnung (Abbildung 8 - Seite 7) gilt als gestrichen (Regel 43 EPÜ).

(54) **Verfahren und Vorrichtung zur Gewinnung von Metalloxiden.**

(57) Verfahren und Vorrichtung zur Herstellung von Metalloxiden durch Bestrahlen von Metallsalz- bzw. Metallalkoholatlösungen mit Mikrowellen mit 1 bis 140 GHz, wobei die Lösungen in versprühter Form, vorzugsweise durch Eindüsen in einen Reaktor oder Aufsprühen auf ein horizontales Endlosband erzielt, bestrahlt werden. Die derart hergestellten Pulver haben große spezifische Oberflächen bei geringer Partikelgröße, sowie eine homogene Verteilung der Bestandteile auch bei Mischoxiden. Die an die Metalle gebundenen Säuren, Alkohole als auch die Lösungsmittel fallen in leicht rückgewinnbarer Form an und werden vorteilhafterweise der Wiederverwendung zugeführt.

Fig.1

EP 0 348 384 A2

**Beschreibung**

### Verfahren und Vorrichtung zur Gewinnung von Metalloxiden

Die Erfindung betrifft ein Verfahren zur Gewinnung von Metalloxiden aus wässrigen und bzw. oder wässrig-organischen oder organischen Lösungen durch Bestrahlung mit Mikrowellen im Frequenzbereich von 1 -140 GHz, welche die besagten Lösungen verdampfen und gleichzeitig die Metallsalze und bzw. oder Metallalkoholate zu den entsprechenden Metalloxiden zersetzen, wobei die, durch Ad- oder Absorption rückgewonnenen anorganischen oder organischen Säuren bzw. Alkohole der Wiederverwendung zuführbar sind.

Das Verfahren eignet sich ebenso zur Gewinnung von Metalloxiden aus gemischt wässrig-organischen Solen, wie z.B. in der keramischen Technik üblich, die Metall-alkoholate enthalten, unter Rückgewinnung der darin enthaltenen organischen Bestandteile.

Der traditionelle Weg der Herstellung oxidischer Pulver für keramische, elektrokeramische, magnetokeramische (ferritische), katalytische oder pigmenttechnische Zwecke oder generell in Verwendung zu Füllstoffen, erfolgt technisch meist auf naßchemischem Weg, durch Fällung, Co-Präzipitation, oder bei Oxidgemischen oder Oxidmischkristallen auf mechanochemischem Weg oder sintertechnisch mit Einbindung von Ionendiffusionsprozessen. Herstellungsbeispiele solcher technisch bedeutender Verbindungen sind einerseits Reinoxide, wie beispielsweise $Fe_2O_3$, $Al_2O_3$, $TiO_2$, $HfO_2$, $BeO_2$, $ThO_2$, $ZrO_2$, seltene Erdoxide, $UO_2$, $MgO$, $NiO$, $CoO$, $CuO$, $PbO$, $Sb_2O_3$, $SnO_2$, anderseits binäre Mischoxide, wie Spinelle ($MgAl_2O_4$, $NiAl_2O_4$), Perowskitstrukturen (wie beispielsweise $BaTiO_3$, $SrTiO_3$), Zirkonoxid Mischkristalle (wie $PSZ = MgO.ZrO_2$, $CaO.ZrO_2$, $TZP = Y_2O_3.ZrO_2$, $CZP = MgO.ZrO_2$, $CaO.ZrO_2$), feste Lösungen, wie beispielsweise $Al_2TiO_5$ (Aluminiumtitanat), oder Compositen, wie beispielsweise $Al_2O_3.ZrO_2$ oder hartmagnetische bzw. weichmagnetische Ferrite, wie beispielsweise $MnFe_2O_4$, (Mn, Zn) $Fe_2O_4$, oder (Pb, Sr, Ba)$O.Fe_{12}O_{18}$, sowie höhere, ternäre oder quaternäre Strukturen definierter Zusammensetzung, wie z.B. $Al_2O_3.TiO_2.V_2O_5$ für Katalysatorzwecke, oder für pigmenttechnische Zwecke, wie beispielsweise $Fe_2O_3.TiO_2$ (Co,Ni,Zn)$TiO_4$, $ZrO_2.V_2O_5$ und viele andere mehr.

In der Praxis haben sich zur Herstellung solcher Pulver geeigneterweise Fällungsverfahren aus Salzlösungen, wie beispielsweise $\gamma$ - FeOOH zur Darstellung von $\gamma$ - $Fe_2O_3$ aus $Fe_2(SO_4)_3$ - und $FeCl_2$-Lösungen, $Al_2O_3$ aus Na-Aluminatlösungen, $ZrO_2$ aus einer $ZrOCl_2$-Lösung, $TiO_2$ aus einer $Ti(SO_4)_2$-Lösung oder einer $TiOCl_2$-Lösung mittels Alkalien bewährt. Die bei diesen Verfahren freiwerdenden Salze fallen der Deponie an, was mit hohen Kosten verbunden ist und ein beträchtliches Umweltproblem darstellt.

Ziel der obengenannten Verfahren ist die Herstellung feinster, möglichst submikroner Pulver (Durchmesser kleiner als $1,0\mu m$) mit möglichst gleichmäßiger Partikelverteilung, möglichst kugelförmiger Struktur, größtmöglicher Oberfläche und guter Verpreß- und Sintereigenschaften in Hinblick auf das Fertigprodukt, nämlich der Keramik, dem ferritischen Magnet oder der Spule, oder mittels der oben genannten Eigenschaften als Füllstoff, Katalysator oder Pigment.

Im Falle von Mischoxiden ist die spezielle Verteilung der Kationen und der Sauerstoffionen im Kristallverband von Bedeutung, bei den elektrooptischen oder magnetischen Eigenschaften im speziellen bei Ferriten, verbunden mit der Ausbildung definierter kristallographischer Strukturen, wie den Spinellstrukturen, den Perowskitstrukturen, den Magnetoplumbitstrukturen, oder der orthorhombischen Struktur des (123)-Supraleiters $YBa_2Cu_3O_7$.

Eine feinstpartikuläre Verteilung, gepaart mit großer Oberfläche kann nur mittels des Sol-Gel-Prozesses, oder durch Feinstaufmahlung gefällter, getrockneter und vorgemahlener Pulver in Kugelmühlen oder Jet-Mühlen erreicht werden.

Die offensichtlichen Nachteile der oben genannten traditionellen Techniken liegen darin, daß bei diesen Verfahren beträchtliche Mengen an Säuren neutralisiert werden, was ein bedeutendes Umweltproblem darstellt bzw. was mit steigenden internationalen Umweltauflagen in naher Zukunft nicht mehr vereinbar sein wird und mit hohen Deponie-Kosten und Chemikalienkosten verbunden ist. Des weiteren sind die oben genannten Prozesse durchwegs zeit-,energie-, bzw. personalintensiv und entsprechen aus diesen Gründen nicht mehr den Anforderungen moderner wirtschaftlicher Technologie.

Mikrowellenenergie findet herkömmlicherweise zum Trocknen und Sintern von Pulvern oder Baustoffmaterial, sowie auch im Lebensmittelbereich Anwendung.

In der US-PS 4 364 859 wird darüberhinaus ein Verfahren vorgestellt, in dem Nitrat- bzw. Oxalatlösungen von radioaktiven Stoffen, wie U, Pu, Th, in die entsprechenden Oxide umgewandelt werden, wobei die Verdampfung des Lösungsmittels und die Umwandlung durch Energiezufuhr mittels Mikrowellen erfolgt. Dazu wird eine bestimmte Menge der jeweiligen Lösung in einem Gefäß über längere Zeit, zwischen 18 Minuten und 2 Stunden in Abhängigkeit von der Menge, mit Mikrowellen von 2,45 GHz bestrahlt.

Durch die lange Bestrahlungszeit, d.h. die langsam fortschreitende Reaktion, ergeben sich jedoch zwei Nachteile.

Einerseits bedürfen die gebildeten Metalloxide zu deren Weiterverarbeitung, insbesondere im Hinblick auf keramische Verarbeitung, weiterer Behandlungsschritte wie etwa Kalcinieren, Behandlung in einer heißen Wasserstoffatmosphäre, Vermahlen, oder ähnliches, bevor die Oxidpulver verpreßt und gesintert werden können. Dies ist ein zusätzlicher Aufwand, welcher die Wirtschaftlichkeit senkt.

Anderseits besteht durch die längerdauernde Energiezufuhr die Gefahr der Entstehung von Zersetzungsprodukten aus den primären Reaktionsprodukten, wobei im besonderen bei der Nitratzersetzung mit der Bildung der giftigen und schwer behandelbaren NO$_x$-Gemische gerechnet werden muß. Deren Behandlung, z.B. durch Gaswäscher und Kondensationsanlagen, bedeutet zusätzlichen Aufwand. Auch muß die dadurch verlorengegangene Säure (HNO$_3$) immer wieder ersetzt werden.

Die Aufgabe der vorliegenden Erfindung liegt darin, ein effektives Zersetzungs-Verfahren mittels Mikrowellen zu schaffen, welches die Herstellung feinstpartikulärer, zur sofortigen Weiterverarbeitung, insbesondere mittels keramischer Verfahren geeigneter Pulver mit großer Oberfläche, hoher Farbintensität, bzw. hervorragenden physikalischen, im speziellen magnetischen Eigenschaften ermöglicht, und die oben genannten Nachteile überwindet, sowie eine Vorrichtung zur Durchführung des Verfahrens anzugeben.

Die genannte Aufgabe wird erfindungsgemäß dadurch gelöst, daß die Metallsalzlösungen, bzw. Metallalkoholatlösungen in versprühter Form, vorzugsweise durch Eindüsen, mit den Mikrowellen bestrahlt werden. Dabei ist der Ausdruck "in versprühter Form" in seinem weitesten Sinn zu verstehen. Als wesentlich ist dabei anzusehen, daß die Lösungen in möglichst kleine Tröpfchen aufzuteilen ist, d.h., vorzugsweise fein zerstäubt oder vernebelt in den Bestrahlungsraum eingebracht wird.

Der Vorteil des Verfahrens gemäß der Erfindung liegt darin, daß die chemischen Reaktionen aufgrund des Bestrahlens einer versprühten Lösung rascher machbar sind als dies bei den herkömmlichen Verfahren der Fall ist. Das Verdampfen des Lösungsmittels und die Zersetzungsreaktionen der ursprünglichen Metallverbindungen verlaufen sehr schnell und in etwa gleichzeitig. Dabei ergab sich als neuer überraschender Effekt, daß die nicht-metalloxidischen Reaktionsprodukte in einer Form vorliegen, die für eine leichte Rückgewinnung und Wiederverwertung gut geeignet ist. Im Gegensatz dazu sehen die bisherigen Verfahren in diesen Stoffen Abfallprodukte, sie lagen ja teilweise in weiter zerlegter, schlecht verwertbarer Form vor, die teilweise sogar durch aufwendige zusätzliche Prozesse unschädlich gemacht werden müssen.

Beispielsweise ist es beim erfindungsgemßen Verfahren möglich, gleichzeitig mit der Bildung eines Metalloxides aus einem Salz, z.B. einem Nitrat,die an das Metallion gebundene Säure, wie z.B. Salpetersäure, die aufgrund der chemischen Reaktion des Nitrations mit dem Hydratwasser als HNO$_3$ gasförmig abdampft, zurückzugewinnen, ohne die Bildung von Zersetzungsprodukten, insbesondere den NO$_x$-Gemischen, zu verursachen. Deren aufgrund strenger Umweltauflagen geforderte Entfernung gelingt nur mittels aufwendiger Verfahren in chemisch-absorptiven oder katalytischen Prozessen ohne Kondenswasser aus Verbrennungsgasen.

Die Zersetzung metallsalzhaltiger, wässriger Lösungen unter thermischer Hydrolyse zur völligen Rückgewinnung einer Säure oder eines Säuregemisches und eines Metalloxides oder Metalloxidgemisches in Form einer echten Mischung oder unter Mischkristallbildung läuft gemäß folgenden Reaktionen ab:

1) $Me_x(Anion)_y + zH_2O + Energie \longrightarrow Me_x(OH)_y.H_2O_{z-y} + y(H\ Anion)$

2) $Me_x(OH)_y.H_2O_{z-y} + Energie \longrightarrow Me_xO_y + zH_2O$

3) $Me_x(Anion)_y + yH^+ + Energie \longrightarrow Me_xO_y + y(H\ Anion)\ (x - y - z - l)$

Die anwendungstechnisch wichtigsten Säuren bzw. Säuregemische, welche rückgewonnen werden können, sind Flußsäure (HF), Salpetersäure (HNO$_3$), Schwefelsäure (H$_2$SO$_4$) und/oder deren Gemische (HNO$_3$/HF), wie sie als Beizlösungen bei der Edelmetall- oder der Sondermetallbeizerei anfallen, sowie Chlorwasserstoffsäure.

Im Falle von Metallalkoholaten, als Sol in wässrigem Medium gemeinsam mit Metallsalzen, wie in der Sol-Gel-Technik in der Keramik üblich, verläuft die Reaktion zu (beispielhaft):

$Ba(OCOCH_3)_2 + 3H_2O + Ti(OC_3H_7)_4 \longrightarrow BaTiO_3 + 4C_3H_7OH + 2CH_3COOH$

Bariumacetat + Wasser + Ti-tetra-isopropylat + Energie $\longrightarrow$ Bariumtitanat + Isopropylalkohol + Essigsäure

Allgemein läßt sich das Verfahren zur Zersetzung von Metallsalzlösungen entsprechend den Elementen der Gruppen VIIIb, IVb, Vb, VIb, VIIb, wie von Fe, Co, Ni, Ti, V, Zr, Hf, Mo sowie dem Al, Ga, Ge, Sn, Pb, sowie der Gruppe der seltenen Erden und dem Uran, als dem wichtigsten Actinidenvertretern, anwenden.

Die hiebei entstehenden Metalloxide fallen mit folgenden Charakteristika an:

a) trockene, polykristalline Pulver

b) kleinste Partikelgrößen (mindestens50% kleiner als 1 μm)

c) homogene Partikelverteilung

d) intensive Färbung infolge der kleinen Partikelform

e) hohe Schüttdichte

f) bei entstehenden Mischkristallen oder Kristallmischungen aus mindestens zwei verschiedenen Kationen bestehenden Lösungen eine homogene Verteilung /Mischung der entstehenden Pulver und finden in folgenden Bereichen eine bedeutende Verwendung:

a) in der Elektronik: Weich- und Hartferrite, Halbleiter, Ionenleiter, Dielektrika, Ferroelektrika und Granatstrukturen wie YIGs und YAGs

b) in der Pigmentindustrie zur Herstellung einfacher oder zusammengesetzter, anorganisch oxidischer Pigmente

c) in der Keramikindustrie zur Herstellung einfacher reiner und reinster Oxidpulver oder Pulvergemische oder zusammengesetzter Pulver oder als

d) Sonderoxide, wie z.B. UO$_2$, als Vormaterial für Kernbrennstoffe.

Als Anionen der oben beschriebenen Salzlösungen können Fluoride (F'), Nitrate (NO$_3$'), Gemische aus Fluoriden und Nitraten, Chloride (Cl'), sowie Sulfate und Acetate Verwendung finden.

Ein weiteres wesentliches Merkmal der vorliegenden Erfindung liegt darin, daß die Zersetzung zu den Metalloxiden und die Rückgewinnung von organischen Verbindungen, wie organische Säuren oder Alkoholen in Abhängigkeit von der Wahl der Mikrowellenfrequenz erfolgt.

Durch den Einsatz von Mikrowellen wird bei dem vorliegenden Verfahren eine rasche, energiegünstige, saubere und technologisch einfach durchzuführende Zersetzung der metallsalzhaltigen, wässrigen Lösung bzw. der gemischt wässrig-organischen Lösung erreicht.

Neben dem oben beschriebenen Verfahren ist des weiteren eine Vorrichtung zur Durchführung dieses Verfahrens Gegenstand der vorliegenden Erfindung.

Weitere Einzelheiten des erfindungsgemäßen Verfahrens und einer zu seiner Durchführung geeigneten Vorrichtung sind den Zeichnungen zu entnehmen, wobei

Fig. 1 und 2 je ein bevorzugtes Ausführungsspiel einer geeigneten Vorrichtung zeigen.

Fig. 3, 4 und 5 zeigen rasterelektronenmikroskopische Aufnahmen von Pulvern aus dem erfindungsgemäßen Verfahren,

Fig. 6 eine Analyse der Teilchengrößen (nach Cilas), sowie die

Fig. 7 und 8 Röntgendiffraktionsmessungen für die Kationenverteilungen der hergestellten Pulver.

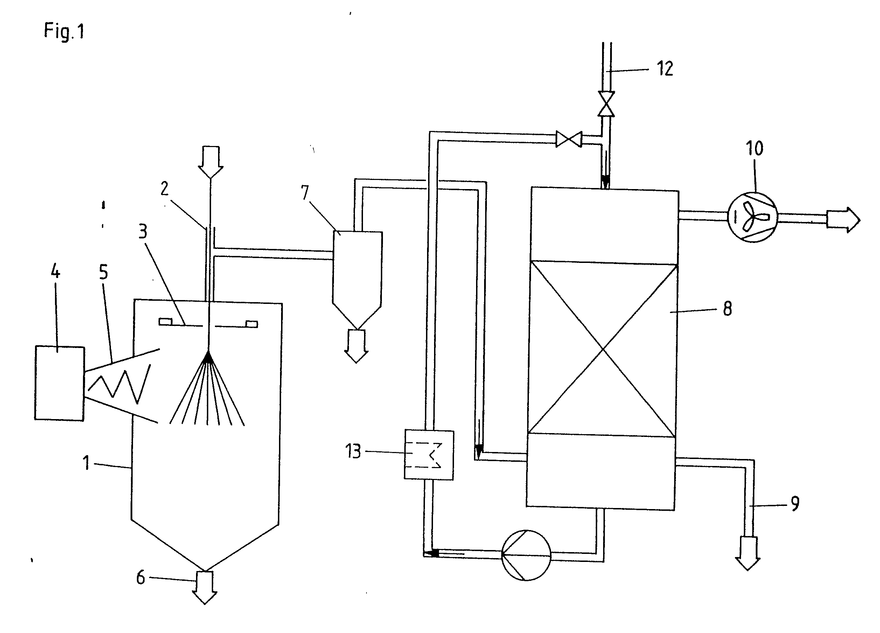

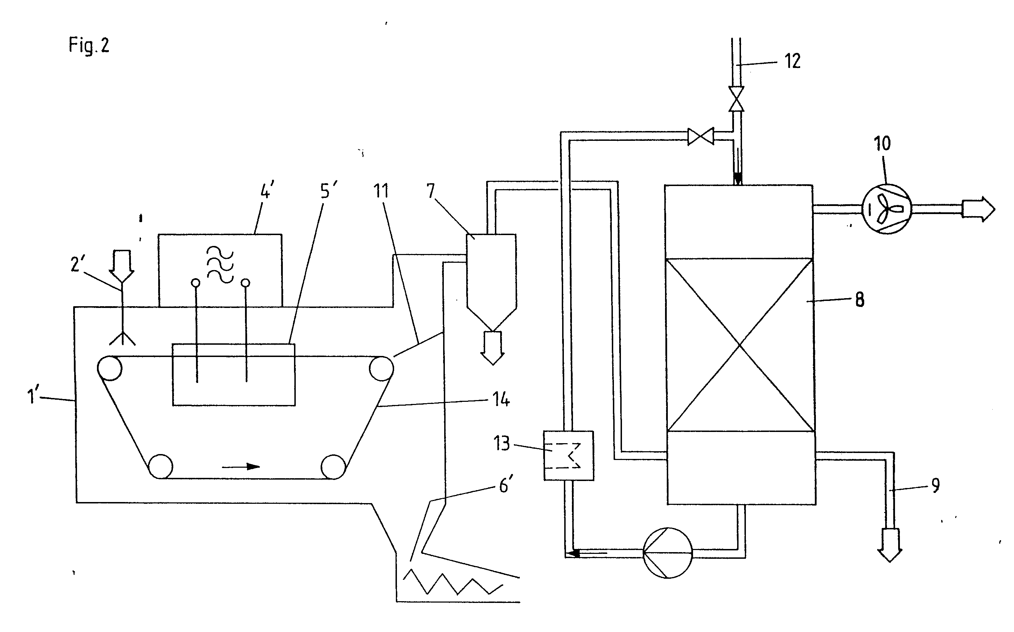

Die in den Fig. 1 und 2 gezeigte Vorrichtung besteht in beiden Ausführungsformen aus einem Reaktor 1,1' mit einer Eindüsungs-Vorrichtung 2,2' für das Einsprühen der Metallsalzlösung, wobei im Bereich des Reaktors ein HF-Generator 4,4' vorgesehen ist, welcher mit einem Mikrowellensender 5,5' für die Zersetzung der Lösung in Verbindung steht. Des weiteren sind eine Austragungseinrichtung 6,6' für den Abzug der Metalloxide aus dem Reaktor 1,1', sowie Einrichtungen für das Abführen der gasförmigen Zersetzungsprodukte aus dem Reaktor 1,1' über einen Staubabscheider 7 in eine Absorptions- bzw. Kondensationskolonne 8, welche mit Absorptionsflüssigkeit bzw. Kühlwasser beschickt wird, vorgesehen.

Der Mikrowellensender 5,5' liefert Mikrowellen, wobei in Abhängigkeit von der zu zersetzenden Lösung unterschiedliche Frequenzen verwendet werden, nämlich solche im Bereich von 1 - 140 GHz, als technisch machbarer Bereich. Insbesondere erfolgt die Zersetzung von nitrat-und fluoridhältigen Lösungen bei 2,45 GHz ± 50 Hz mit 6 Watt bis 6 Kilowatt Leistungsaufnahme pro Sender.

In einer vorteilhaften Ausführungsform nach Fig. 1 ist der Reaktor 1 turmförmig ausgeführt und die Eindüsungs-Vorrichtung 2 für das Einsprühen der Lösung steht mit einem Reflektor 3 im turmförmigen Reaktor 1 in Verbindung. An einer Seitenwand des turmförmigen Reaktors 1 ist ein HF-Generator 4 mit einem oder mehreren Mikrowellensender 5 angeordnet, welche die vollständige thermische Zersetzung der Lösung bewirken. Für den Abzug der gebildeten Metalloxide ist eine Austragungseinrichtung 6 am Boden des Turmreaktors 1 vorgesehen.

In einer weiteren vorteilhaften Ausführungsform nach Fig. 2 ist der Reaktor als horizontaler Reaktor 1' mit einer Eindüsungs-Vorrichtung 2' ausgeführt, welche die Metallsalzlösung auf ein im Reaktor 1' angeordnetes, kontinuierlich laufendes und im wesentlichen horizontales Endlosband 14, bestehend aus/ oder beschichtet mit einem dielektrischen Medium, versprüht. Der HF-Generator 4', welcher mit dem Mikrowellensender 5' im Reaktor 1' in Verbindung steht, ist an der Oberseite des Reaktors angeordnet. Das Endlosband 14 wird im kontinuierlichen Umlauf durch den Sender 5' hindurchgeführt, wobei unter Ausnützung einer Dünnschichtverdampfung der kontinuierlich zulaufenden Lösung, Abdampfung der Säure und Abstreifen des /der entstehenden Oxide/s mittels eines Oxidabstreifers 11 im Reaktor 1' erfolgt, welcher Abstreifer 11 die Metalloxide kontinuierlich aus dem Endlosband 14 (Fig.2) abstreift.

Bei beiden Ausführungsformen werden die gasförmigen Reaktionsprodukte nach Ausleiten aus dem Reaktor 1, 1' vorerst durch einen Staubabscheider 7 geführt, in dem mitgerissenes Metalloxidpulver abgeschieden und dem im Reaktor erzeugten Metalloxid beigefügt wird. Danach werden die gasförmigen Reaktionsprodukte einer Kolonne 8 zugeführt. Diese kann als Ab- bzw. Adsorptionskolonne, aber auch als Kondensationskolonne ausgeführt sein. Durch die Zuleitung 12 wird je nach eingesetztem Verfahren Ab- bzw. Adsorptionsflüssigkeit oder auch Kühlflüssigkeit eingeleitet. Durch den Überlauf 9 werden die rückgewonnenen Produkte aus der Kolonne 8 abgezogen und können vorteilhafterweise der Wiederverwendung zugeführt werden, während das gereinigte Abgas mittels des Absaugventilators 10 an die Umgebung abgegeben wird. Des weiteren ist noch ein Wärmetauscher bzw. Kühler 13 im Kreislauf des Ab- bzw. Adsorptionsmittels oder der Kühlflüssigkeit vorgesehen.

Bei dem erfindungsgemäßen Verfahren treten beispielhaft folgende chemische und physikalische Reaktionen auf:

a) $H_2O(l) \longrightarrow H_2O(g)$ Wasserverdampfung

b) $HNO_3(aqu) \longrightarrow HNO_3(g)$ Salpetersäureverdampfung

c) $HF(aqu) \longrightarrow HF(g)$ Flußsäureverdampfung

d) $MeF_2(aqu) + H_2O(g) \longrightarrow MeO(s) + 2HF(g)$ Fluoridzersetzung

e) $Me(NO_3)_2(aqu) + H_2O(g) \longrightarrow MeO(s) + 2HNO_3(g)$ Nitratzersetzung

f) $Me.alkoholat(aqu) \longrightarrow MeO + Alkohol$

g) $Me.acetat + H_2O \longrightarrow MeO + Essigsäure$

bei Verwendung von 2,45 GHz Mikrowellenfrequenz, oder eine Zersetzung der Chlorid-Sulfat-Acetatlösungen bei entsprechend höheren oder niedrigen Frequenzen.

Die entsprechenden Säuren werden in beiden Ausführungsbeispielen durch Absorption mittels Kolonne wiedergewonnen und in den Prozeß der Laugung, Lösung u.dgl. wieder rückgeführt.

Beispiel 1:

Zersetzung von Nitratlösungen (Wässrige Lösungen von Nitratsalzen).

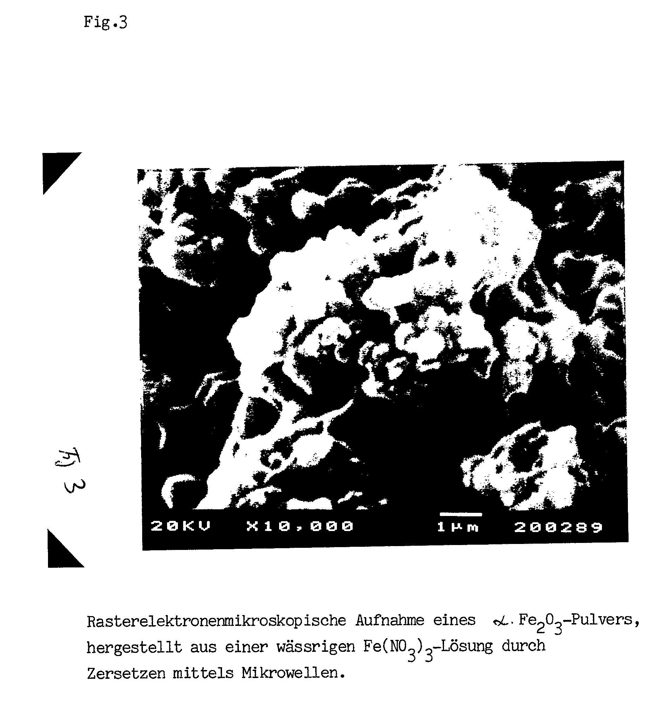

a) 650 g/l $Fe(NO_3)_3.9\ H_2O$, gelöst in 1033 ml Wasser wurden im Verlauf von 90 min in einen vertikal angeordneten Sprühreaktor versprüht und bei 2,45 GHz und bei 600 W Energieoutput zu 257 g $Fe_2O_3$ (Fig.3) zersetzt. Hierbei entstanden 0,85 m³/h Abgas, welches praktisch kein NOx enthielt, aber aus der Reaktion entstehende Salpetersäure konnte in der Gasphase nachgewiesen werden (vermutlich in monomolekularer Form vorliegend). Der exakt gemessene NOx Gehalt betrug 30 ppm, was einem molaren Zersetzungsverlust der entstandenen Salpetersäure von 0,02 mol oder, berechnet auf die in der Lösung enthaltenen rund 300 g/l Nitrat, einen perzentuellen Nitratverlust von 0,04% entspricht. Die eingesetzte Energiemenge entsprach 1,033 Liter x 600 Watt x 0,86 = 533 kcal/l zur Umsetzung der Nitratlösung zum entsprechenden Oxid und der gleichzeitigen Verdampfung von Lösungswasser und der Salpetersäure.

b) Analog wurden Nitratlösungen der Elemente Zn, Mn, Al, Y, Ba, Cu zersetzt unter Bildung der entsprechenden Oxide und Salpetersäure.

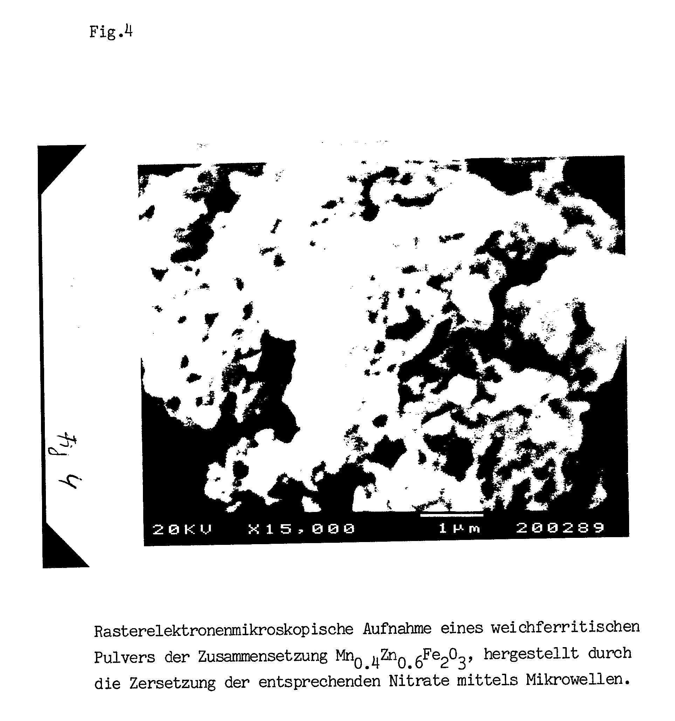

c) Beispiel der Herstellung eines Weichferriten: Eine Lösung bestehend aus den Nitratsalzen von Eisen ($Fe(NO_3)_3$), Zink ($Zn(NO_3)_2$) und Mangan ($Mn(NO_3)_2$) entsprechend einer molaren Zusammensetzung von 52,6 mol% $Fe_2O_3$, 17,1 mol% ZnO und 30,3 mol% MnO wurde durch Versprühen dieser Lösung und Zersetzung mittels Mikrowelle bei 2,45 GHz zu einem Weichferrit-Vormaterial der Zusammensetzung $(ZnO)_{0.4}(MnO)_{0.6}Fe_{(2)}O_{(4)}$ zersetzt (Fig.4).

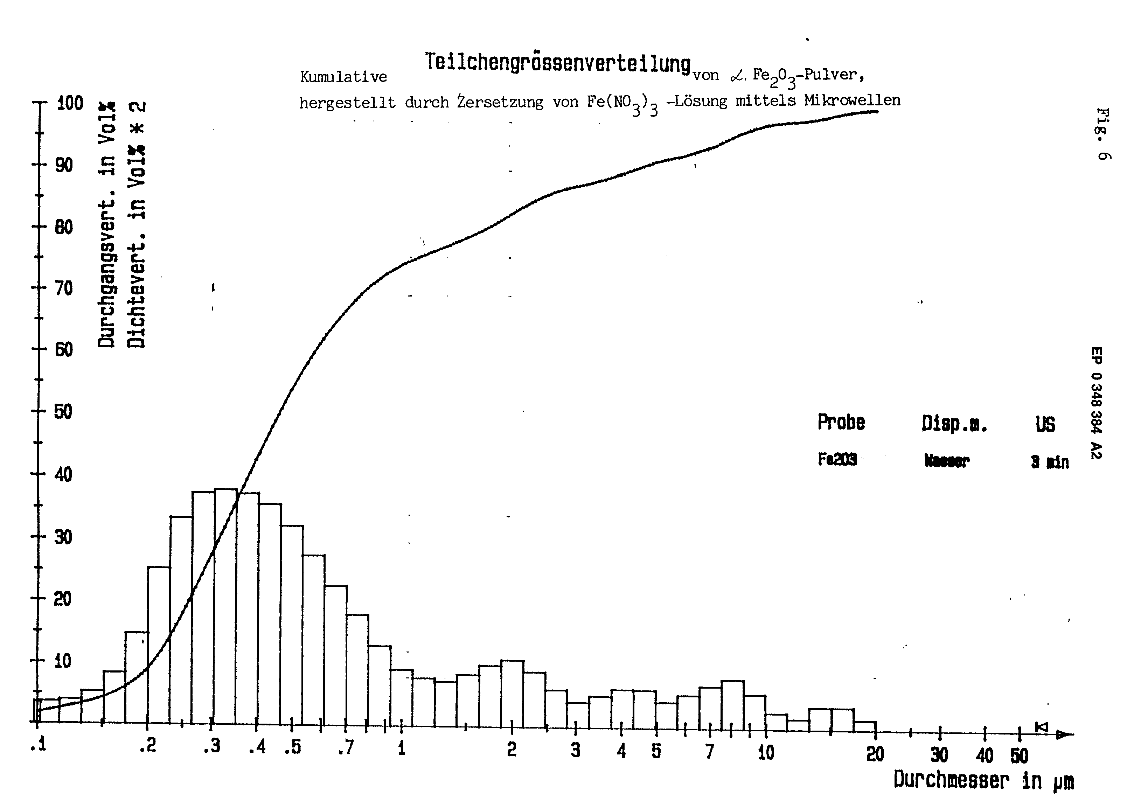

Die in beiden Fällen hergestellten Pulver wiesen spezifische Oberflächen von mindest 50 $m^2/g$ und maximal 130 $m^2/g$ auf, mit einer Kornverteilung (nach Cilas) von mindest 50% kleiner als 1,0 Mikrometer, maximal jedoch mehr als 90% im submikronen Bereich befindlich (Fig. 6).

Durch die extreme Feinheit des entstehenden Eisenoxidpulvers konnte Pigmenttauglichkeit des Materials nachgewiesen werden.

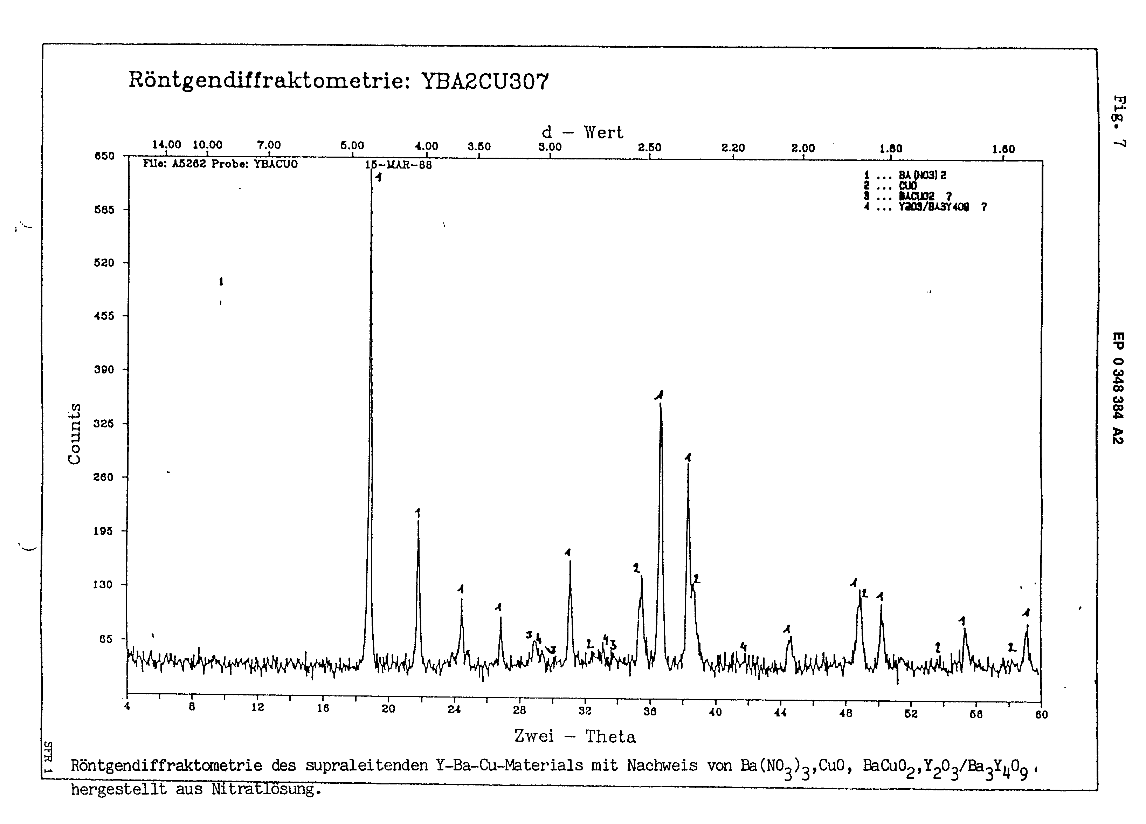

c) Zersetzung einer gemischten Lösung von den Nitraten von Cu, Ba, Y aus einer wässrigen Lösung bei 2,45 GHz führte zur Bildung einer Supraleitervorstruktur bestehend aus den Verbindungen BaO, CuO, $BaCuO_2$, $Y_2O_3.Ba_3Y_4O_9$, mit einer spezifischen Oberfläche von 20 $m^2/g$ (BET). Aus der rasterelektronenmikroskopischen Mikroröntgenanalyse konnte im vorliegenden Mischoxid eine homogene Verteilung der Kationen in den Pulverkörnern nachgewiesen werden (Fig. 7), wobei das Mischoxid durch nachträgliches Sintern bei höheren Frequenzen bis maximal 140 GHz zur Supraleiterstruktur $YBa_2Cu_3O_7$ zusammengesintert werden konnte. An dieser konnte dann der bekannte Meissnereffekt nachgewiesen werden.

Beispiel 2:

Zersetzung gemischter Nitrat-Flußsäurehältiger Lösungen.

Dieses System wurde gewählt, um Elemente alleine oder in Mischverbindungen zu zersetzen, welche alleine in $HNO_3$ nicht löslich sind, wie z.B. Titan. Zersetzt werden konnte z.B. eine gemischte Lösung mit 182,5 g/l $Al(NO_3)_3$ entsprechend 0,86 mol/l und 100 g/l $HNO_3$ (entsprechend einer 10gew% $HNO_3$) und von 40 g/l HF (entsprechend einer 4mol% HF) sowie 30 g/l Ti enthaltend durch Versprühen in einen Reaktor und gleichzeitiger Mikrowellenzersetzung bei 2,45 GHz bis 22,145 GHz im Zeitraum von 20 bis 30 min zu den entsprechenden Säuren (HF und $HNO_3$) sowie zu Aluminium Titanat ($Al_2TiO_5$) Pulver. Die höheren Frequenzen von 22,145 GHz begünstigen die Zersetzung des Fluorides, bewirken jedoch eine erhöhte Zersetzung der Nitrate zu NOx-Suboxiden.

Beispiel 3:

Zersetzung von chloridischen Lösungen.

Eine Lösung mit 370 g/l $TiOCL_2$ (entsprechend 2.75 mol/l) wurde im Frequenzbereich von 2,45 GHz bis zu 22,145 GHz zu Titandioxid $TiO_2$ und Salzsäure zersetzt. Die höhere Frequenz begünstigt die Zersetzung des Oxychlorides. Die entstehende Pulveroberfläche betrug 20 $m^2/g$.

Beispiel 4:

Zersetzung einer metall-organischen Lösung:

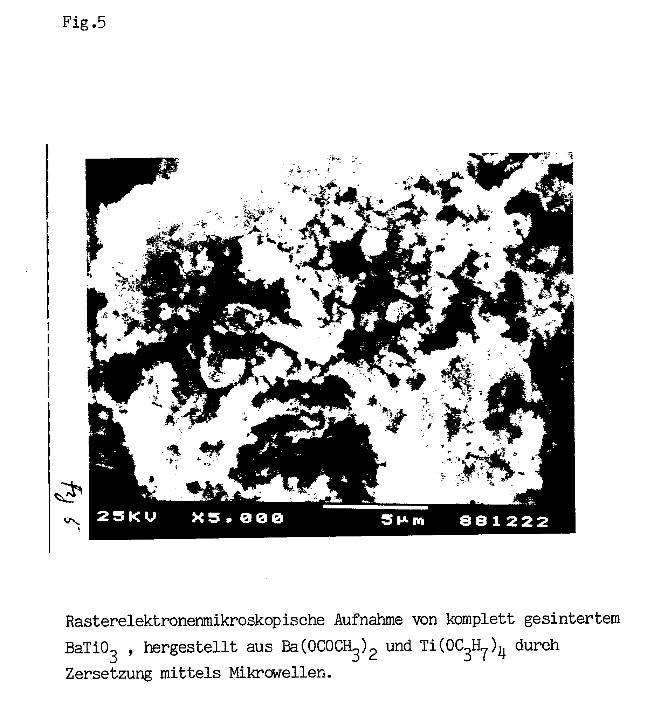

Zwei Lösungen, eine von Bariumacetat in Wasser (0.4 mol/l $Ba(OOCCH_3)_2$) und Titan-tetra-isopropylat in Isopropanol (0.4 mol/l $Ti(OC_3H_7)_4$) wurden zu einem Sol vereinigt und in einen mikrowellenbeheizten Reaktor eingesprüht. Hierbei konnten im Zeitraum von 20 min ein braungefärbtes Pyroloseprodukt erzeugt werden. Gleichzeitig entstehende Essigsäure und Isopropanol aus den Verbindungen sowie der Lösungsalkohol entwichen gasförmig und konnten mittels Kondensation rückgewonnen werden. Die Reaktion wurde bei einer Mikrowellenfrequenz von 2,45 GHz in Gang gesetzt. Nach weiterer Behandlung bei 22,125 GHz bis 140 GHz konnte innerhalb von 30 min bis 10 min, je nach gewählter Frequenz, zu einem rein weißen Pulver der stöchiometrischen Zusammensetzung $BaTiO_3$ mit Perowskitstruktur gesintert werden (Fig. 5). Die entstehende Oberfläche des Pulvers betrug ca. 2 $m^2/g$.

Abschließend sollen zur Erläuterung des oben beschriebenen Verfahrens einige Anwendungsbeispiele genannt werden:

1) Zersetzung von $HF/HNO_3$-Mischsäure (Edelstahl-, Titan-,Zirkonium-, Hafniummischsäure) mit der Rückgewinnung der Säuren und der Gewinnung von Edelstahl-,Titanoxid-,Zirkoniumoxid- und Hafniumoxidpulvern

2) Zersetzung von Eisennitratlösungen wie $Fe(NO_3)_3$ zu $Fe_2O_3$ mit $\alpha$, $\gamma$ -Strukturen, mit Oberflächenwerten von zumindest 70$m^2/g$ und einem Kleinstpartikelanteil von zumindest 50% kleiner als 1,0 $\mu m$.

3) Zersetzung von Aluminiumnitratlösungen wie $Al(NO_3)_3$ zu $Al_2O_3$ mit $\alpha$, $\gamma$ -Strukturen, mit Oberflächenwerten bis zu 50$m^2/g$ und zumindest 50% kleiner als 1,0 $\mu m$

4) Zersetzung von Fe, Zn, Ni, Co, Cu, Mn-Nitratgemischen, wie z.B. $(Mn,Zn)_xFe_y(NO_3)_3$ zur Herstellung von Weichferriten, in Form von Pulvern einer vorteilhaften Zusammensetzung von z.B.
$[MnO]_{0.6} [ZnO]_{0.4}. Fe_2O_4$
(allgemein: $[Mn_{1-x} Zn_x]Fe_2O_4$)
mit besonderen weichferritischen Eigenschaften, z.B. hoher Permeabilität.

5) Zersetzung von $Al(NO_3)_3$ und $TiOF_2$ zu Aluminiumtitanat, gemäß der Formel $Al_2TiO_5$

6) Zersetzung von $TiOF_2$ und $V(NO_3)_5$ aus Beizsäurelösungen zu $TiO_2.V_2O_5$ als Vormaterial für die Herstellung eines SCR-Katalysators

7) Zersetzung komplexer Nitrate wie (Zr,V)-Nitrate, (Ni,Mo,Co,Al)-Nitrate zu Spinellstrukturen besonderer Farbe oder besonderer katalytischer Eigenschaften, mit Verwendung in der Pigmentindustrie und bei der Anwendung von Hydrierkatalysatoren.

8) Gewinnung komplexer Mischoxide mit supraleitenden Eigenschaften wie z.B. $YBa_2Cu_3O_7$ (Yttrium-Barium-Kupfer-Oxid) aus den entsprechenden wässrigen Lösungen deren Citrate oder Nitrate.

9) Zersetzung von $Ti(OC_3H_7)_4$ oder ähnlichen Alkoholaten von Übergangsmetallen gemeinsam mit den Acetaten oder Citraten von Ba oder Sr für die Herstellung von Perowskitstrukturen als Einsatz für Dielektrikas.

## Patentansprüche

1. Verfahren zur Gewinnung von Metalloxiden aus wässrigen und bzw. oder wässrig-organischen oder organischen Lösungen durch Bestrahlung mit Mikrowellen im Frequenzbereich von 1 - 140 GHz, welche die besagten Lösungen verdampfen und gleichzeitig die Metallsalze und bzw. oder Metallalkoholate zu den entsprechenden Metalloxiden zersetzen, wobei die, durch Ad- oder Absorption rückgewonnenen anorganischen oder organischen Säuren bzw. Alkohole der Wiederverwendung zuführbar sind, dadurch gekennzeichnet, daß die Metallsalzlösungen bzw. Metallalkoholatlösungen in versprühter Form, vorzugsweise durch Eindüsen, mit den Mikrowellen bestrahlt werden.

2. Vorrichtung zur Durchführung des Verfahrens nach Anspruch 1, bestehend aus einem Reaktor (1, 1') mit einem oder mehreren Mikrowellensendern (5, 5'), welche mit einem, außen am Reaktor angebrachten HF-Generator (4, 4') verbunden sind, einer Austragsvorrichtung (6, 6') für die gebildeten Metalloxide, sowie Einrichtungen für das Abführen der gasförmigen Zersetzungsprodukte über einen Staubabscheider (7) in eine Ab- bzw. Adsorptions- oder Kondensationskolonne (8), gekennzeichnet durch eine Eindüsungsvorrichtung (2, 2') zum Einsprühen der Metallsalz- bzw. Metallakoholatlösungen.

3. Vorrichtung nach Anspruch 2, wobei der Reaktor (1) turmförmig ausgeführt und die Austragsvorrichtung (6) am Boden des Reaktors vorgesehen ist, dadurch gekennzeichnet, daß die Eindüsungsvorrichtung (2) mit einem Reflektor (3) für die Mikrowellen in Verbindung steht.

4. Vorrichtung nach Anspruch 2, mit einem im wesentlichen horizontalen Reaktor (1'), in dessen Inneren ein oder mehrere Mikrowellensender (5') vorgesehen sind, gekennzeichnet durch ein kontinuierlich laufendes, im wesentlichen horizontales Endlosband (14), welches vorzugsweise aus einem dielektrischen Medium besteht oder mit einem solchen beschichtet ist, und einer Eindüsungsvorrichtung (2') zum Aufsprühen der Metallsalz- bzw. Metallalkoholatlösungen auf das besagte Endlosband (14).

Fig.1

Fig. 2

EP 0 348 384 A2

Fig.3

Rasterelektronenmikroskopische Aufnahme eines $\alpha$. $Fe_2O_3$-Pulvers, hergestellt aus einer wässrigen $Fe(NO_3)_3$-Lösung durch Zersetzen mittels Mikrowellen.

Fig.4

Rasterelektronenmikroskopische Aufnahme eines weichferritischen Pulvers der Zusammensetzung $Mn_{0.4}Zn_{0.6}Fe_2O_3$, hergestellt durch die Zersetzung der entsprechenden Nitrate mittels Mikrowellen.

Fig.5

Rasterelektronenmikroskopische Aufnahme von komplett gesintertem BaTiO$_3$ , hergestellt aus Ba(OCOCH$_3$)$_2$ und Ti(OC$_3$H$_7$)$_4$ durch Zersetzung mittels Mikrowellen.

**Teilchengrössenverteilung** von $\alpha$. $Fe_2O_3$-Pulver,
Kumulative
hergestellt durch Zersetzung von $Fe(NO_3)_3$ –Lösung mittels Mikrowellen

Fig. 6

EP 0 348 384 A2

| Probe | Disp.m. | US |
|---|---|---|
| Fe2O3 | Wasser | 3 min |

Durchgangsvert. in Vol%
Dichtevert. in Vol% * 2

Durchmesser in µm

Röntgendiffraktometrie: YBA2CU307

Röntgendiffraktometrie des supraleitenden Y-Ba-Cu-Materials mit Nachweis von $Ba(NO_3)_3$, $CuO$, $BaCuO_2$, $Y_2O_3/Ba_3Y_4O_9$, hergestellt aus Nitratlösung.